# EUROPEAN PATENT APPLICATION

(11) **EP 2 420 322 A1**
(43) Date of publication of application: **22.02.2012**
(21) Application number: 11177560.7
(22) Date of filing: 15.08.2011
(51) Int. Cl.: B05B 12/00, B05B 12/08, B05B 5/16, G01F 1/64

(54) **Powder flow monitoring using grounded hoses**

(30) Priority: 16.08.2010 US 856875
(71) Applicant: Nordson Corporation, Westlake, OH 44145-1119 (US)
(72) Inventor: Beuk, Edwin Jeroen, 3930 Belgium (BE); deVeer, Andre Petrus Maria, 5346VE Oss (NL)
(74) Representative: Findlay, Alice Rosemary

(57) **Abstract**

Apparatus for detecting flow of powder coating material (16) in an electrically nonconductive powder hose (18) include providing an electrically conductive material (24) that extends along at least a portion of the length of the hose to collect tribo-charge transfer that is produced by frictional contact between the powder coating material (16) and an interior surface of the hose (18). The collected tribo-charge transfer is used to produce an electrical current in the electrically conductive material. A circuit (28) detects the current in the electrically conductive material and produces an output that indicates whether powder coating material is flowing through the hose.

## Description

The present disclosure relates generally to the art of applying powder coating material to a work piece using electrostatic spraying technology. More particularly, the disclosure and inventions herein relate to methods and apparatus for monitoring or detecting flow of powder coating material during a powder coating operation.

In many industries, it has become common practice to apply paints and other coatings to products in the form of dry particulate powder. Powder coatings offer a number of advantages over traditional liquid coatings and paints, among them are lower cost, reduced pollution, shorter curing times and improved physical properties.

Powder coating materials are applied to workpieces by spraying. The powder is drawn from a container or hopper by a pump that feeds the powder through hoses to one or more spray guns from which it is sprayed towards the workpiece by means of the pneumatic force supplied by the pump. Powder coating application is also commonly although not exclusively done with electrostatic spray guns in which the workpiece is held at ground and the powder is electrostatically charged. The electrostatic charge is applied to the powder coating particles by an electrode supported by the spray gun. Electrostatic charge may alternatively be applied to the powder coating particles using tribo-charging within the spray gun.

From the simplest powder coating system that may use only one spray gun and one powder supply, to more complex powder coating systems that may use forty or more spray guns supplied from a plurality of pumps and supply hoppers (for example, hoses that convey about 5 to about 60 or more pounds of powder coating material per hour), it can be advantageous to be able to confirm or verify that powder coating material is in fact flowing through the hoses to the spray guns. By providing an automatic way to detect powder flow, an operator need not spend time manually checking all the spray guns, pumps and hoses. US Patent 5,739,429 (the '429 patent), the entire disclosure of which is fully incorporated herein by reference, discloses flow monitoring apparatus using a flow meter and hopper weight change characteristics. US Patent 6,734,679 (the '679 patent), the entire disclosure of which is fully incorporated herein by reference, discloses detecting flow of powder particles using a powder transportation line that includes a portion provided with a electrostatically friction charging material that is located upstream or downstream of a powder pump, or within a powder pump. The powder particles flowing through the portion of the transportation line generate an electric charge as a result of friction between the powder and the friction charging material. The electrical charge that is generated is detected in the form of a current by a sensing unit.
In accordance with an embodiment of one or more of the inventions presented in this disclosure, an apparatus for monitoring or detecting the flow of powder coating material entrained in an air stream utilizes an electrically conductive material that extends along a portion or length of an electrically non-conductive powder hose or tubing that connects a source of powder coating material to a spray gun. The hose exhibits tribe-charge transfer caused by friction between the powder coating material flowing through the hose and the inside wall of the hose. The electrically conductive material may be connected or coupled to a circuit that detects current produced in the electrically conductive material by the tribo-charge transfer. In a particular embodiment, the electrically conductive material comprises an electrical conductor such as a wire.
In various alternative exemplary embodiments, the wire may be embedded in the hose, wrapped around the hose, disposed adjacent the hose, supported on a member that is outside the hose, and disposed as part of a second tube or hose that surrounds at least a portion of the hose, to name a few examples.
The use of an electrically conductive material that extends along at least a portion of the length of the hose significantly increases the signal strength of the current produced by the tribo-charge transfer, thus providing an excellent signal that indicates whether powder coating material is flowing through the hose. The inventions herein also include methods for monitoring or detecting powder flow embodied in the use of such apparatus.

The invention will now be further described by way of example with reference to the accompanying drawings, in which:

Fig. 1 is a functional schematic diagram of an exemplary embodiment of a powder coating system utilizing an exemplary embodiment of one or more of the inventions;

Fig. 2 is an embodiment in perspective of a hose illustrating an exemplary embodiment of the inventions;

Fig. 3 illustrates another embodiment of a hose and an exemplary embodiment of the inventions;

Fig. 4 illustrates additional alternative embodiments of the inventions; and

Figs. 5A and 5B illustrate additional alternative embodiments of the inventions with Fig. 5A being in perspective and Fig. 5B being a cross-section taken along the line 5B-5B in Fig. 5A.

Although the exemplary embodiments herein are presented in the context of a powder coating material application system for applying powder coating material to a workpiece, the apparatus is are not limited to powder coating materials but rather will find application for transport or conveyance of any dry particulate material that can exhibit a tribe-charging effect with a portion of the flow path of the material, for example, a hose. The present appartus may be used with dense phase systems utilizing dense phase pumps for transporting particulate material such as the pumps shown in United States Patent Application publication number 2005/0158187 A1, and may also be used with dilute phase systems utilizing Venturi pumps such as the pumps 308 shown in United States Patent No. 7,325,750. The apparatus is not limited to any particular type of process media or dry particulate material, although the inventions are especially suited for powder coating material as the process media. Still further, while the exemplary embodiments herein illustrate and refer to specific design and configuration features of a powder coating material application system including examples of pumps, hoses and spray guns, those skilled in the art will readily appreciate that the apparatus will find application beyond just the exemplary embodiments and may be used with application systems having various modifications and components such as pumps and spray guns of many different designs. Although the exemplary embodiments illustrate use of the apparatus in corona-type electrostatic charging systems, the apparatus may be used with other electrostatic technologies such as, for example, tribe-charging systems.

As used herein, we define an "exterior surface" of a hose to mean a radially outermost surface that defines the outside diameter of the hose at least along a portion of the hose, meaning that a hose may have more than one outside diameter although typically hoses are uniform in diameter. We use the terms "outside" and/or "outward" an exterior surface to mean any position or location that is other than embedded in the exterior surface. For example, outside or outward of an exterior surface may mean lying adjacent to or in contact with or attached to or spaced from the exterior surface. We use the term "embedded" in a surface to refer to disposing a member or component sub-surface such as, for example, at least partially below a surface or completely within a body of material. We use the term "non-conductive material" when referring to a hose to mean that in normal use the hose material is electrically insulating and does not conduct current. We use the term "electrically conductive" to mean a material, for example a metal wire or composite material, that has a low resistance to current in normal use.

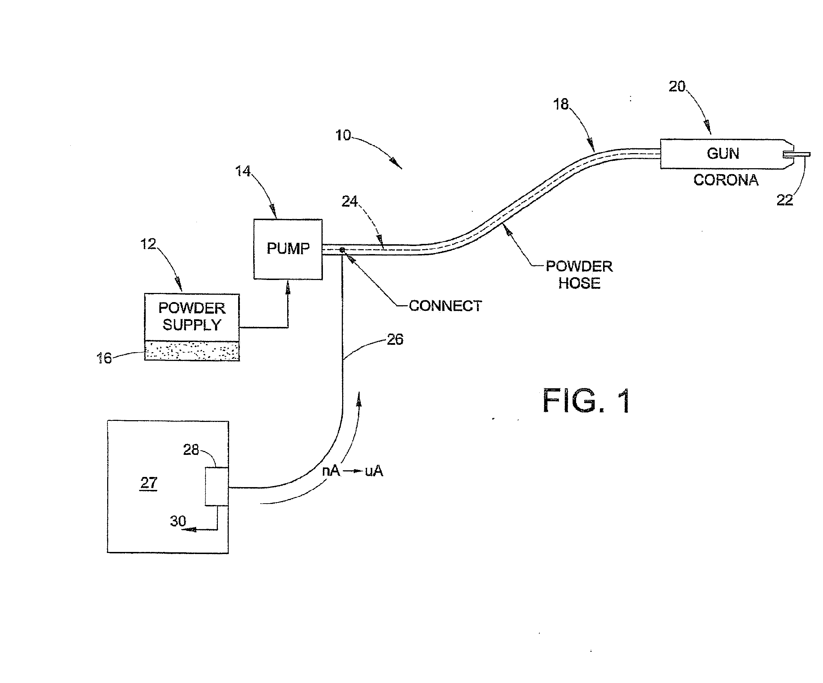

With reference to Fig. 1 then, a powder coating material application system 10 may include a source of powder coating material comprising a supply 12 and a powder pump 14. The supply 12 may be, for example, a box, hopper, feed center and so forth. The pump 14 may be, for example, a Venturi-type pump or a dense phase powder pump, and is used to draw powder coating material 16 from the supply 12 and convey the powder coating material through one or more hoses 18 to one or more spray guns 20. The powder coating material may be virgin powder coating material meaning the powder coating material has not been previously sprayed, or reclaimed powder coating material in which powder overspray is collected and recycled for use, or a combination of virgin and reclaimed powder coating material. Although the embodiment of Fig. 1 illustrates only a single spray gun and hose, many powder coating material application systems utilize many spray guns 20 and hoses 18 being fed by many pumps 14 and possibly more than one supply 12.

The inventions herein provide a way to verify that powder coating material is indeed flowing through the one or more hoses or tubing 18 (we use the terms tubing and hose interchangeably herein), as distinguished from the prior known systems that primarily try to verify flow through the pump or the spray gun. It is not uncommon for the hoses 18 to become kinked or blocked during use, and when there are many hoses it can take a long time to confirm which hose or hoses are blocked. A blocked hose during a powder coating operation can produce a poor finish or no coating on the end product or workpiece.

The spray gun 20 may be any suitable corona-type spray gun that uses a high voltage supply (not shown) to produce ionization at an electrode 22, which applies an electrostatic charge to the powder coating material particles. An example of a spray gun is shown in International Patent Application publication no. 2005/018823 A2. The workpiece (not shown) is typically maintained at ground potential so that the charged particles are attracted to and adhere to the workpiece. Many different types of corona spray guns are known and commonly used today, and the inventions may also be used with corona type spray guns later developed. The inventions may also be used with other electrostatic spray technologies such as, for example, tribo-charging spray guns, and moreover may find application in systems that are not electrostatic. The inventions herein utilize the powder coating material exhibiting a tribo-charge effect for charge transfer with the hose 18 when the flowing powder coating material contacts the hose interior surface. Whether the hose and powder combination exhibits a stronger or weaker tribo-charge effect is not critical, although a stronger tribo-charging effect may produce a better signal related to flow of powder coating material 16 in the hose 18.

In the embodiment of Fig. 1, the hose 18 includes an electrically conductive material 24 that extends along at least a portion of the length of the hose 18. As shown, the electrically conductive material 24 may extends along substantially the entire length of the hose 18, however, we have found that shorter lengths may be used, particularly for hoses that exhibit a stronger tribo-charge effect with the powder coating material 16.

A signal wire 26 may be used to form an electrical circuit that includes the electrically conductive material 24. In the exemplary embodiments herein, the signal wire 26 is electrically coupled or connected at one end to the electrically conductive material 24, and at another end to a control circuit 27. The signal wire 26 may be connected at any location to the electrically conductive material 24, but we have had particularly good success if the signal wire 26 is connected near the outlet of the pump 14, but such is not required.

The control circuit 27 may include a current detection circuit 28. The control circuit 27 may be an overall control circuit or system for the powder coating material application system 10, for example, a model i-Control^{®} system available from Nordson Corporation, Westlake, Ohio. However, the inventions may be used with any control system, or may be used as a standalone circuit or a standalone circuit that interfaces with a control system. All that is needed is a current detection circuit 28 or other current detection technique (for example, magnetic coupling induced by the current in the electrically conductive material 24) that can detect current in the electrically conductive material 24, for example via the signal wire 26, which current is produced by tribo-charge transfer between the powder coating material 16 and the interior surface of the hose 18. The tribo-charge transfer produces electrical charges that are collected by the electrically conductive material 24. The circuit 28 may be a standalone circuit that produces a signal 30 that indicates whether powder coating material is flowing through the hose 18. This signal 30 may be used by a control circuit 27 to decide whether to interrupt a coating operation or at least operation of the associated spray gun. Alternatively, the signal 30 may simply be used to produce a visual or audible warning or alert that there is a problem with powder flow through the associated hose 18.

The current detection circuit 28 may be any circuit that can detect current. For example, the circuit 28 may be an ammeter, a multi-meter, a circuit that converts current to voltage and detects voltage levels, a voltmeter, and so on. Typically, a threshold current level will be selected or predetermined to indicate whether powder coating material is flowing through the hose 18. The current level may be automatically determined by the circuit 28, for example using a simple comparator, or an operator might visually confirm current level with an ammeter or other device. The output signal 30 may be used, for example, as a go/no-go signal to indicate whether powder coating material is flowing through the hose 18. The current produced in the electrically conducive material may be on the order of nanoamps to milliamps but other signal levels, higher or lower, may be used as needed.

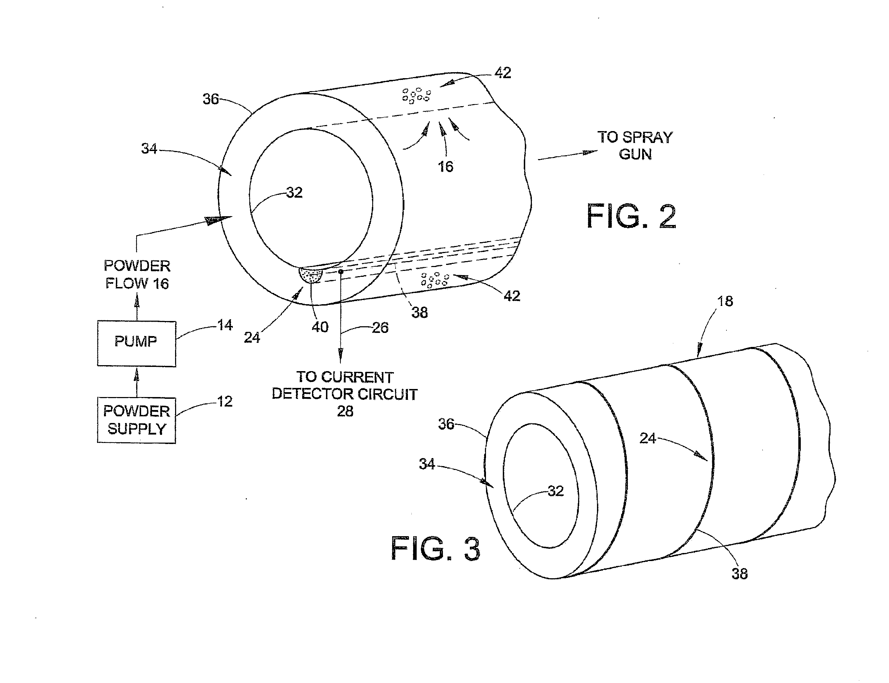

Fig. 2 illustrates an embodiment of the tubing or hose 18. In this example, the electrically conductive material 24 is at least partially embedded in an interior surface 32 of the hose 18. The hose 18 typically may include an annular wall 34 having an interior surface 32 and an exterior surface 36. The annular wall 34 may comprise an electrically non-conductive material, for example, polyolefine elastomer, but many other suitable materials may alternatively be used. The electrically conductive material 24 may comprise, for example, an electrical conductor such as a wire 38 as part of a conductive cord 40 that is embedded in the interior surface 32. Tribo-electric charge 42 that is produced by powder coating material particles impacting or contacting the interior surface 32 of the hose 18 (represented by the arrows in Fig. 2) will pass to the wire 38 and produce a current that will be detected by the current detection circuit 28 via the signal wire 26.

It will be noted that in all the embodiments herein, preferably the electrically conductive material 24, wherever it is disposed, is isolated from contact with electrical ground. For example, the electrically conductive material 24 is preferably not exposed to human contact or contact with a grounded surface or object.

In the Fig. 3 embodiment of the hose 18, the electrically conductive material 24 may be wrapped around the exterior surface 36 of the hose 18. The electrically conductive material 24 in this example might simply comprise an electrical conductor such as a wire 38. The wire 38 may be attached to the exterior surface 36 using a suitable adhesive or tape, for example, or may be embedded in the exterior surface 36, much like the embedding done in the interior surface 32 example of Fig. 2.

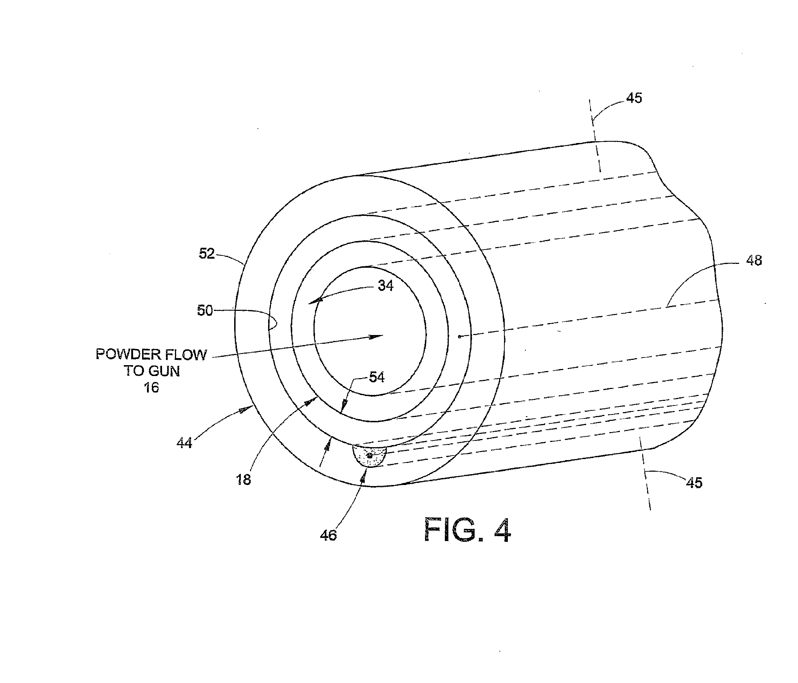

Fig. 4 illustrates several alternative concepts that may be used in various combinations or alone. In one example, the hose 18 is surrounded by a second or exterior piece of hose or tubing 44. Powder coating material 16 still flows through the interior space of the annular wall 34. The exterior hose 44 may extend along substantially the entire length of the interior hose 18, or only along a portion or portions of the hose 18 (the latter represented by the dashed lines 45 in Fig. 4). In one version, the exterior hose 44 may include an embedded electrically conductive material 46, much like the hose 18 has in the Fig. 2 embodiment. Alternatively, a separate loose wire 48 may be captured or otherwise held between an interior surface 50 of the second hose 44 and the exterior surface 36 of the first hose 18. As still a further alternative, the electrically conductive material 46 or a wire 48 may be wound around the exterior surface 52 of the second hose 44, similar to the embodiment of Fig. 3 herein. Depending on the dimensional differences between the outside diameter of the interior hose 18 and the inside diameter of the exterior hose 44, there may be a gap or space 54 present along a portion or all of the overlaying hoses 44, 18. We have found that this gap 54 does not prevent the detection of the tribo-charge current produced within the first hose 18 although preferably there is contact at some point between the outer wall of the interior hose 18 and the inner wall of the exterior hose 44. However, one can expect that reducing the size of this gap 54, or eliminating the gap 54, may in some cases produce a stronger current in the electrically conductive material 46.

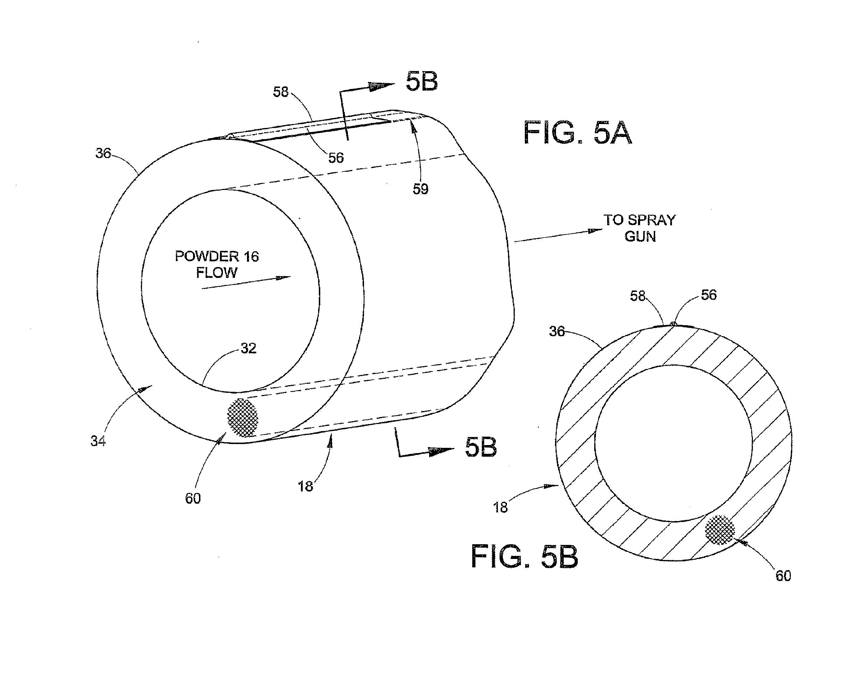

Figs. 5A and 5B illustrate additional alternative embodiments for the hose 18. The hose 18 may include an electrical conductor 56 in the form of a wire, for example, that is held in place against the exterior surface 36 of the hose 18 using a member 58, for example, a piece of adhesive tape or other attachment member. As represented by the dashed lines 59, the wire 56 and supporting member 58 may extend along a portion or substantially all of the length of the hose 18. The wire 58 may also be wound around the hose 18 exterior surface 36.

Alternatively, the hose 18 may include an embedded wire mesh or braided wire jacket 60 that functions like the conductor 56. The signal wire 26 (Fig. 1) may be connected to the wire mesh 60 to produce a current that results from the tribo-charge transfer between the powder coating material 16 and the interior surface 32 of the hose 18. The wire mesh 60 may be completely embedded in the hose 18 or partially embedded. Also, the wire mesh may extend entirely throughout the bulk of the hose 18 material or only partially.

One of the improvements noted is that the longer the length that the electrically conductive material 24 extends along the length of the hose 18, or stated another way the greater the amount of electrically conductive material 24 provided along the length of the hose 18, the more tribo-charge transfer is collected in the electrically conductive material 24. The more tribo-charge transfer that is collected in the electrically conductive material 24 increases the signal level of the electrical current that can be produced in the electrically conductive material 24 when the electrically conductive material is coupled to a current detection circuit 28. However, other factors may be taken into account in determining the length that the electrically conductive material 24 should extend along the length of the hose 18 for any particular application, as well as for selecting the threshold current level that will be used to indicate whether powder coating material is flowing through the hose 18. These factors may include, but are not necessarily limited to nor required in all cases: the length of the hose 18, the location of the electrically conductive material relative to the hose 18, type of powder coating material, material from which the annular wall of the hose 18 is constructed, velocity of the powder flow through the hose, flow rates of the powder coating material through the hose, and inside diameter of the hose 18.

Embodiments of the invention can be described with reference to the following numbered clauses, with preferred features laid out in the dependent clauses:
1. Apparatus for monitoring the flow of powder coating material entrained in an air stream, comprising:
   a powder coating material spray gun,
   a hose being connected at a first end in fluid communication with a source of powder coating material; the hose being connectable at a second end to the spray gun,
   the hose comprising an annular wall, the annular wall being constructed from electrically nonconductive material that exhibits tribo-electric charge transfer when contacted by powder coating material flowing through the hose,
   an electrically conductive wire,
   a circuit to detect current in the electrically conductive wire produced by the tribo-electric charge when powder coating material is flowing through the hose; the electrically conductive wire extending for at least a portion of the length of the hose; the circuit producing an output that indicates whether powder coating material is flowing through the hose.
2. The apparatus of clause 1 wherein the electrically conductive wire extends along substantially the entire length of the hose.
3. The apparatus of clause 1 wherein the annular wall extends between an interior surface that contacts the powder coating material and an exterior surface, at least a part of the electrically conductive wire being embedded in the annular wall.
4. The apparatus of clause 1 wherein the annular wall extends between an interior surface that contacts the powder coating material and an exterior surface, the electrically conductive wire being supported on a member that is adjacent the hose exterior surface.
5. The apparatus of clause 4 wherein the member comprises a second hose having a second annular wall that is received over at least a part of the length of the first hose, the electrically conductive wire being disposed in or on the second hose.
6. The apparatus of clause 1 wherein the electrically conductive wire comprises an electrical wire or electrically conductive strip.
7. The apparatus of clause 1 wherein the annular wall extends between an interior surface that contacts the powder coating material and an exterior surface, at least a part of the electrically conductive wire being located between the exterior surface and a member that is adjacent the hose exterior surface.
8. Apparatus for monitoring flow of powder coating material entrained in an air stream, the apparatus comprising:
   a powder coating material spray gun,
   a hose that is connectable at a first end in fluid communication with a source of powder coating material and at a second end to the spray gun,
   the hose comprising an annular wall, the annular wall comprising an electrically nonconductive material that exhibits tribo-electric charge transfer when contacted by powder coating material flowing through the hose,
   an electrically conductive material embedded in the annular wall,
   a circuit that detects current in the electrically conductive material produced by the tribo-electric charge when powder coating material is flowing through the hose.
9. The apparatus of clause 8 wherein the electrically conductive material comprises a wire.
10. The apparatus of clause 9 wherein the electrically conductive material comprises the wire embedded in the hose with an electrically conductive bonding material.
11. The apparatus of clause 8 wherein the electrically conductive material is embedded in an interior surface of the annular wall.
12. The apparatus of clause 8 wherein the electrically conductive material is embedded in an exterior surface of the annular wall.
13. The apparatus of clause 8 wherein the electrically conductive material extends along substantially the entire length of the hose.
14. The apparatus of clause 8 wherein the circuit produces an output that indicates whether powder is flowing through the hose during operation of the spray gun.
15. Apparatus for monitoring flow of powder coating material entrained in an air stream, the apparatus comprising:
   a powder coating material spray gun,
   a hose that is connectable at a first end in fluid communication with a source of powder coating material and at a second end to the spray gun,
   the hose comprising an annular wall, the annular wall comprising an electrically nonconductive material that exhibits tribo-electric charge transfer when contacted by powder coating material flowing through the hose,
   the annular wall extending between an interior surface that contacts powder coating material and an exterior surface,
   an electrically conductive material disposed radially outward from the exterior surface,
   a circuit that detects current in the electrically conductive material produced by the tribo-electric charge when powder coating material is flowing through the hose.
16. The apparatus of clause 15 wherein the electrically conductive material is disposed on the exterior surface.
17. The apparatus of clause 15 wherein the electrically conductive material is wound about the exterior surface.
18. The apparatus of clause 15 wherein the electrically conductive material is supported with a member that is adjacent the exterior surface.
19. The apparatus of clause 18 wherein the member comprises a sleeve disposed about at least a portion of the exterior surface.
20. The apparatus of clause 19 wherein the electrically conductive material is embedded in a surface of the sleeve.
21. The apparatus of clause 19 wherein the electrically conductive material is disposed between an interior surface of the member and the exterior surface of the hose annular wall.
22. The apparatus of clause 18 wherein the member comprises a second hose that closely surrounds at least a portion of the first hose.
23. The apparatus of clause 22 wherein the second hose is electrically nonconductive.
24. The apparatus of clause 23 wherein the second hose includes the electrically conductive material comprising a wire mesh.
25. The apparatus of clause 22 wherein the electrically conductive material is embedded in the second hose.
26. The apparatus of clause 22 wherein the electrically conductive material is wound about at least a portion of the second hose.
27. The apparatus of clause 15 wherein the electrically conductive material is isolated from electrical ground during normal use of the apparatus.

## Claims

1. Apparatus for monitoring the flow of powder coating material entrained in an air stream, comprising:
a powder coating material spray gun,
a hose being connected at a first end in fluid communication with a source of powder coating material; the hose being connectable at a second end to the spray gun,
the hose comprising an annular wall, the annular wall being constructed from electrically nonconductive material that exhibits tribo-electric charge transfer when contacted by powder coating material flowing through the hose,
an electrically conductive wire,
a circuit to detect current in the electrically conductive wire produced by the tribo-electric charge when powder coating material is flowing through the hose; the electrically conductive wire extending for at least a portion of the length of the hose; the circuit producing an output that indicates whether powder coating material is flowing through the hose.

2. The apparatus of claim 1 wherein the annular wall extends between an interior surface that contacts the powder coating material and an exterior surface, at least a part of the electrically conductive wire being embedded in the annular wall.

3. The apparatus of claim 1 wherein the annular wall extends between an interior surface that contacts the powder coating material and an exterior surface, the electrically conductive wire being supported on a member that is adjacent the hose exterior surface.

4. The apparatus of claim 3 wherein the member comprises a second hose having a second annular wall that is received over at least a part of the length of the first hose, the electrically conductive wire being disposed in or on the second hose.

5. The apparatus of claim 1 wherein the annular wall extends between an interior surface that contacts the powder coating material and an exterior surface, at least a part of the electrically conductive wire being located between the exterior surface and a member that is adjacent the hose exterior surface.

6. The apparatus of any preceding claim wherein the electrically conductive wire extends along substantially the entire length of the hose.

7. The apparatus of any preceding claim wherein the electrically conductive wire comprises an electrical wire or electrically conductive strip.

8. Apparatus for monitoring flow of powder coating material entrained in an air stream, the apparatus comprising:
a powder coating material spray gun,
a hose that is connectable at a first end in fluid communication with a source of powder coating material and at a second end to the spray gun,
the hose comprising an annular wall, the annular wall comprising an electrically nonconductive material that exhibits tribo-electric charge transfer when contacted by powder coating material flowing through the hose,
an electrically conductive material embedded in the annular wall,
a circuit that detects current in the electrically conductive material produced by the tribo-electric charge when powder coating material is flowing through the hose.

9. The apparatus of claim 8 wherein the electrically conductive material comprises a wire.

10. The apparatus of claim 9 wherein the electrically conductive material comprises the wire embedded in the hose with an electrically conductive bonding material.

11. The apparatus of claims 8 or claim 9 wherein the electrically conductive material is embedded in an interior surface of the annular wall.

12. The apparatus of claim 8 or claim 9 wherein the electrically conductive material is embedded in an exterior surface of the annular wall.

13. The apparatus of any one of claims 8 to 12 wherein the electrically conductive material extends along substantially the entire length of the hose.

14. The apparatus of any one of claims 8 to 13 wherein the circuit produces an output that indicates whether powder is flowing through the hose during operation of the spray gun.
